(19) Europäisches Patentamt
European Patent Office
Office européen des brevets

(11) **EP 2 414 781 B1**

(12) **FASCICULE DE BREVET EUROPEEN**

(45) Date de publication et mention
de la délivrance du brevet:
**17.12.2014 Bulletin 2014/51**

(21) Numéro de dépôt: **10715309.0**

(22) Date de dépôt: **08.03.2010**

(51) Int Cl.:
***G01D 3/08*** (2006.01)

(86) Numéro de dépôt international:
**PCT/FR2010/050392**

(87) Numéro de publication internationale:
**WO 2010/112720 (07.10.2010 Gazette 2010/40)**

(54) **PROCEDE ET DISPOSITIF DE DIAGNOSTIC DE DEFAUTS DE FONCTIONNEMENT DES SONDES DE DETERMINATION DE LA POSITION ANGULAIRE D'UN ROTOR D'UNE MACHINE ELECTRIQUE TOURNANTE POLYPHASEE**

VERFAHREN UND EINRICHTUNG ZUR DIAGNOSE VON FEHLFUNKTIONEN VON SENSOREN ZUR BESTIMMUNG DER WINKELLAGE EINES ROTORS EINER MEHRPHASIGEN ROTIERENDEN ELEKTRISCHEN MASCHINE

METHOD AND DEVICE FOR DIAGNOSING MALFUNCTIONS OF SENSORS FOR DETERMINING THE ANGULAR POSITION OF A ROTOR OF A POLYPHASE ROTATING ELECTRIC MACHINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0952021**

(43) Date de publication de la demande:
**08.02.2012 Bulletin 2012/06**

(73) Titulaire: **Valeo Equipements Electriques Moteur 94046 Créteil Cedex (FR)**

(72) Inventeur: **LABISTE, Laurent F-94100 Saint Maur des Fosses (FR)**

(56) Documents cités:
**EP-A- 2 124 327    WO-A-2006/010864 US-A- 5 182 500**

**Description**

L'invention concerne un procédé de diagnostic de défauts de fonctionnement des sondes de détermination de la position angulaire d'un rotor d'une machine électrique tournante polyphasée comprenant un stator.

L'invention concerne également un dispositif pour la mise en oeuvre d'un tel procédé.

Elle s'applique plus particulièrement à des machines réversibles, dites alterno-démarreurs, utilisées dans l'industrie automobile, aussi bien en mode alternateur qu'en mode moteur.

Dans le cadre de l'invention, le terme "polyphasé" concerne plus particulièrement des machines électriques tournantes triphasées ou hexaphasées, mais peut aussi concerner des machines électriques tournantes biphasées ou fonctionnant sur un nombre de phases plus élevé.

Pour fixer les idées, on se placera dans ce qui suit dans le cas de l'application préférée de l'invention, à savoir le cas d'une machine électrique tournante réversible triphasée du type alterno-démarreur, sans que cela limite en quoi que ce soit la portée de l'invention.

Comme il est bien connu, une machine électrique tournante réversible comporte un alternateur comprenant :

- un rotor constituant un inducteur associé classiquement à deux bagues collectrices et deux balais par lesquels est amené un courant d'excitation; et
- un stator polyphasé portant plusieurs bobines ou enroulements, trois dans l'exemple de réalisation considéré, constituant un induit, qui sont connectés en étoile, ou le plus souvent en triangle dans le cas d'une structure triphasée, et qui délivrent vers un pont redresseur, en fonctionnement alternateur, une puissance électrique convertie.

L'alternateur peut aussi être réversible et constituer un moteur électrique, ou machine électrique tournante, permettant d'entraîner en rotation, via l'arbre de rotor, le moteur thermique du véhicule. Cet alternateur réversible est appelé alternateur-démarreur ou encore alternodémarreur. Il permet de transformer l'énergie mécanique en énergie électrique et vice versa.

Ainsi, en mode alternateur, l'alterno-démarreur charge notamment la batterie du véhicule tandis qu'en en mode démarreur l'alterno-démarreur entraîne le moteur thermique appelé également moteur à combustion interne, du véhicule automobile pour son démarrage.

Dans les machines réversibles de l'industrie automobile, par exemple, fonctionnant selon les modes moteur ou démarreur, le stator doit être piloté en courant de manière à appliquer à tout moment au rotor le couple nécessaire aussi bien pour le mettre en mouvement que pour lui imprimer la rotation requise pour le fonctionnement du moteur. Le couple à appliquer au rotor, et donc le courant à fournir aux phases du stator, est une fonction sinusoïdale de la position angulaire, repérée par un angle $\theta$, du rotor par rapport au stator.

Un système complet de détermination de la position angulaire instantanée $\theta(t)$ du rotor d'un alterno-démarreur triphasé et de commande de cet organe, soit en mode alternateur, soit en mode moteur (démarreur), comprend typiquement quatre sous-systèmes principaux : un alterno-démarreur, un convertisseur de courant électrique alternatif-continu réversible, un module de commande de ce convertisseur et un module de détermination de position angulaire $\theta$ du rotor.

Le convertisseur est généralement constitué d'un pont de redresseurs électronique, comprenant autant de branches de transistors MOS-FET de puissance que de phases, par exemple trois dans l'exemple décrit.

En mode alternateur, l'alterno-démarreur alimente en courant alternatif triphasé le convertisseur et en mode moteur, c'est l'alterno-démarreur qui est alimenté en énergie électrique triphasée par le convertisseur réversible, qui fonctionne en mode générateur de courant triphasé.

En mode moteur, les transistors MOS-FET sont commandés selon une séquence appropriée de six signaux de commandes générés par le module de commande. Comme il est bien connu également, ces signaux doivent être générés en fonction de la position angulaire 6 du rotor.

Il est donc nécessaire de ce fait de déterminer cette position angulaire $\theta$ avec une grande précision pour obtenir un fonctionnement correct des ponts redresseurs, notamment pour éviter tout risque de détérioration des composants semi-conducteurs, mais aussi et surtout, en mode moteur ou démarreur, un couple optimisé fourni par l'alterno-démarreur.

C'est la fonction qui est dévolue au module de détermination de la position angulaire du rotor, de façon à générer un signal $\theta(t)$ représentant la variation instantanée de la position angulaire mesurée et à le transmettre en entrée du module de commande.

Dans l'Art Connu, diverses méthodes ont été proposées à cette fin.

A titre d'exemple non limitatif, la Demanderesse a proposé, dans la demande de brevet international WO 2006/010864 A2, un dispositif de détermination de la position d'un rotor d'une machine électrique tournante comprenant un stator, qui permet d'obtenir la position angulaire précise recherchée tout en étant bon marché, simple à mettre en oeuvre et peu sensible aux perturbations magnétiques.

Le dispositif enseigné dans cette demande de brevet comprend une pluralité de sondes de mesure de champ magnétique fixes par rapport au stator de la machine électrique tournante et aptes à délivrer des premiers signaux représentatifs d'un champ magnétique tournant détecté par ces capteurs, et des moyens de traitement de ces premiers signaux par un opérateur apte à fournir des deuxièmes signaux dépendant de la position angulaire atteinte par le rotor.

Les sondes sont généralement constituées par des capteurs à effet Hall linéaires, par exemple trois que l'on dénommera ci-après $S_1$ à $S_3$, placés à 120° électrique sur une machine électrique tournante triphasée, en l'occurrence un alterno-démarreur, en vis-à-vis d'une cible solidaire du rotor et magnétisée alternativement Nord/Sud pour chaque pôle de la machine. Ces capteurs, $S_1$ à $S_3$, délivrent des signaux de types sinusoïdaux, $VS_1$ à $VS_3$, respectivement. Pour une plus ample description, on se reportera avec profit à la description de la demande de brevet international WO 2006/010864 A2 précitée.

On constate expérimentalement que les signaux, $VS_1$ à $VS_3$, générés par les trois sondes de mesure, $S_1$ à $S_3$, que l'on qualifiera de "bruts", comportent généralement un fort taux d'harmoniques, notamment un taux important d'harmonique d'ordre 3 et 5 et que leurs amplitudes relatives sont différentes. Il est donc difficile de construire à partir de ces trois signaux bruts très imparfaits, deux signaux se rapprochant d'une fonction sinusoïdale idéale (c'est-à-dire exempts d'harmoniques), d'amplitudes identiques, d'offsets nuls et déphasés de façon non triviale (déphasage non multiple de 180°).

Pour pallier cette difficulté, le principe de base est de trouver deux combinaisons linéaires distinctes qui permettent, d'obtenir les deux sinusoïdes désirées, tout en s'affranchissant le mieux possible des problèmes rappelés ci-dessus.

En première approximation, il est possible d'admettre que les capteurs ont des caractéristiques identiques ou pour le moins très proches, qu'il sont placés dans un même environnement thermique et électromagnétique et donc que les signaux délivrés par ces capteurs gardent des caractéristiques communes. Ces hypothèses conduisent à considérer que :

- leurs offsets évoluent en même temps en fonction d'un champ perturbateur éventuel (comme, par exemple, la magnétisation du rotor) ;
- leurs taux d'harmonique d'ordre 3 sont très semblables et en phase avec leurs harmoniques fondamentaux ; et
- les signaux électriques générés par ces capteurs sont déphasés d'environ 120°.

Ces hypothèses rendent possible le choix de deux combinaisons linéaires qui annulent en partie l'harmonique d'ordre 3 et les offsets. De façon simple, en choisissant pour combinaisons linéaires les différences entre deux signaux de sortie de capteurs on obtient deux signaux sinusoïdaux déphasés de 60° et qui répondent aux critères de choix exprimés plus haut. Les signaux ainsi obtenus sont recentrés et contiennent moins d'harmoniques que les signaux bruts.

Une fois les deux sinusoïdes obtenues, il devient possible d'extraire directement la valeur θ de la position angulaire du rotor. Pour ce faire, en divisant les deux signaux précités, on s'affranchit de l'amplitude, puis, à l'aide d'une fonction mathématique ou d'un tableau, on peut inverser la fonction et déterminer le quadrant angulaire grâce aux signes des signaux. Pour fixer les idées, à titre d'exemple non limitatif, si le déphasage entre signaux est de φ = 90° par exemple (signaux sinus - cosinus), il s'agit d'une fonction ArcTangente. De nouveau, pour une plus ample description du procédé, on se reportera avec profit à la description de la demande de brevet international WO 2006/010864 A2 précitée.

Dans la pratique, ces conditions de fonctionnement, que l'on peut qualifier "d'idéal", sont rarement réunies.

Il s'ensuit que, toujours dans la pratique, le procédé qui vient d'être rappelé s'avère souvent peu satisfaisant.

Aussi la Demanderesse a proposé dans sa demande de brevet français N°0853359 déposée le 23 mai 2008 un procédé et un dispositif de détermination de la position angulaire palliant les inconvénients de l'Art Connu.

Pour ce faire, selon une caractéristique essentielle de ce procédé, on détermine la position angulaire réelle du rotor de la machine électrique tournante en utilisant un asservissement entre une position angulaire réelle et une position angulaire estimée. Le dispositif enseigné par cette demande de brevet comporte une boucle de rétroaction, que l'on appellera ci-après « boucle de tracking », dont le comportement est semblable à celui d'une boucle à verrouillage de phase ou "PLL" selon la terminologie anglo-saxonne couramment utilisée (pour "Phase Lock Loop").

Les circuits composant le dispositif de détermination de la position angulaire du stator sont agencés de telle sorte que la relation (1) suivante soit satisfaite :

$$sin(\theta_{real}+\varphi_1).sin(\theta_{est}+\varphi_2) - sin(\theta_{real}+\varphi_2).sin(\theta_{real}+\varphi_1) = \frac{1}{2}\,sin(\varphi_2 - \varphi_1).sin(\theta_{real} - \theta_{est})$$

relation dans laquelle :

- $\theta_{real}$ représente la position angulaire réelle du rotor ;

- $\theta_{est}$ représente la position angulaire estimée du rotor ; et
- $\varphi_1$ et $\varphi_2$ représentent les déphasages des signaux correspondant à des décalages angulaires des capteurs par rapport à un repère angulaire de référence lié au stator de la machine électrique tournante.

Il s'ensuit que $\varphi = (\varphi_1 - \varphi_2)$ est une constante (ces deux déphasages étant déterminés à partir d'un même repère angulaire de référence) et représente le déphasage entre les signaux $\theta_{real}$ et $\theta_{est}$.

Cette relation permet d'obtenir un signal d'erreur entre la position angulaire réelle et la position angulaire estimée.

La boucle dite de "tracking" permet de minimiser l'erreur entre $\theta_{real}$ et $\theta_{est}$. Si cette erreur devient faible, il est bien connu que $\sin(\theta_{real} - \theta_{est})$ est sensiblement égal à $(\theta_{real} - \theta_{est})$. Le deuxième terme de la relation rappelée ci-dessus devient alors sensiblement égal à $K(\varphi_1 - \varphi_2)$, avec $K$ constante égale à $\frac{1}{2} \sin(\varphi)$.

Dans ce qui suit, pour fixer les idées, on se placera dans le cadre d'un tel dispositif, sans que cela limite en quoi que ce soit la portée de l'invention.

On réalise aisément que la détermination de la position angulaire $\theta$ du rotor par rapport au stator dépend de la fiabilité des informations fournies par les sondes de mesure, ce d'ailleurs quel que soit le procédé exact mis en oeuvre puisque, dans tous les cas, cette position angulaire est obtenue à partir d'une combinaison des signaux polyphasés délivrés par ces sondes.

Aussi il est nécessaire de s'assurer de leur bon fonctionnement et de mettre en oeuvre un procédé de diagnostic des défauts de fonctionnement de ces sondes.

Dans le cadre de l'invention, on doit bien comprendre que par "défauts de sonde de mesure" on entend également les défauts des circuits électroniques et électriques périphériques (connexions électriques, circuits d'alimentation en énergie électrique des sondes, etc.).

Dans l'art connu, il a été proposé différents procédés de diagnostic.

Le diagnostic des sondes de mesure de position angulaire peut être obtenu par une comparaison entre une évaluation de la vitesse du véhicule effectuée par la boucle de tracking précitée et une mesure de cette vitesse effectuée par une unité de calcul par exemple. Cependant la boucle de tracking permettant l'estimation de la position électrique peut renvoyer une valeur moyenne précise de vitesse même lorsqu'une ou plusieurs sondes présentent des défauts (tel qu'un circuit ouvert ou un court-circuit).

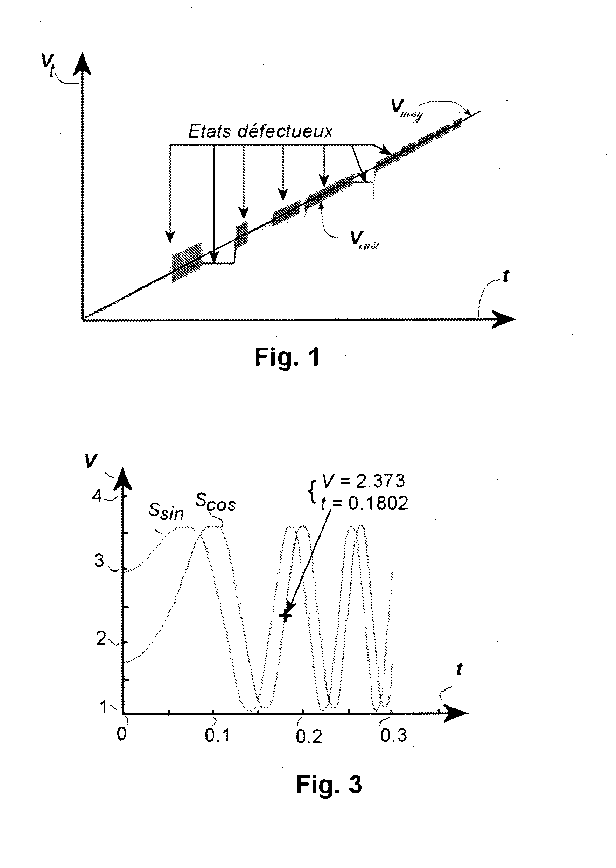

La figure 1 placée en fin de la présente description illustre un exemple d'évolution de la vitesse de rotation du rotor $V_t$ en fonction du temps $t$. Sur cette figure 1, plusieurs défauts successifs de sondes ont été simulés (circuits ouverts, courts-circuits, etc.), comme le montre l'évolution de la vitesse instantanée $V_{inst}$. On constate néanmoins que la boucle de tracking reste verrouillée et fournit une vitesse moyenne $V_{moy}$ tout à fait correcte.

Il s'ensuit qu'une mesure externe de vitesse est nécessaire pour obtenir une valeur de référence.

Un autre procédé consiste à seulement utiliser le signal d'erreur de la boucle tracking. Cependant celle-ci est très sensible à de petites saturations et ne peut détecter aucune erreur en présence de signaux de très faible d'amplitude (incluant les erreurs dues aux courts-circuits de sonde ou à des connecteurs débranchés). En outre, dans certains modes de réalisation pratiques, le signal d'erreur de boucle de tracking est entaché d'un bruit important en raison d'une absence de calibrage et d'une faible précision dus à la simplification des circuits électroniques utilisés. On doit donc admettre une marge importante en ce qui concerne les seuils de détection. Il s'ensuit qu'un certain nombre de défauts ne peut être diagnostiqué. Par exemple, la déconnexion simultanée des trois sondes de mesure de position angulaire ou la déconnexion de la source d'alimentation en énergie électrique n'est pas détectée.

Un autre procédé consiste à effectuer la somme des signaux générés en sortie des trois sondes de mesure, $S_1$ à $S_3$, soit :

$$\Sigma = VS_1 + VS_2 + VS_3 \approx 0$$

Mais ce procédé exige de recourir à des circuits électroniques additionnels de façon à, soit mesurer le signal $VS_1$, soit mesurer la somme complète de signaux, ce qui augmente la complexité du dispositif de diagnostic et le rend plus onéreux. En outre, pour la raison rappelée précédemment

(faible précision due à l'absence de calibrage), on doit admettre une marge importante en ce qui concerne les seuils de détection. Il s'ensuit qu'un certain nombre de défauts ne peut être diagnostiqué. Par exemple, comme précédemment rappelé, la déconnexion des trois sondes ou de la source d'alimentation en énergie électrique n'est pas détectée.

L'invention se fixe pour but un procédé de diagnostic de défauts de fonctionnement dus aux sondes de mesure de position angulaire du rotor d'une machine électrique tournante polyphasée comprenant un stator, notamment du type alterno-démarreur, palliant les inconvénients des procédés de l'art connu, dont certains ont été rappelés, ce sans augmentation significative ni de la complexité des circuits électroniques mis en oeuvre, ni du coût global.

Selon une caractéristique principale du procédé selon l'invention, le diagnostic des sondes de mesure de position angulaire du rotor est obtenu en effectuant les mesures directes de paires de signaux sinus et cosinus déterminés à partir de combinaisons linéaires des signaux polyphasés délivrés par ces sondes, l'acquisition d'un paramètre que l'on appellera *"état de vitesse"*, en l'occurrence typiquement les états *"vitesse* > 0" et « *vitesse* = 0 » (ou encore « *vitesse* $\geq$ 0 "), et d'un profil de vitesse minimum.

Cette mesure ne nécessite donc pas de connaître la valeur précise de la vitesse.

Selon le procédé de l'invention, un diagnostic des principales erreurs dues aux sondes de mesure de position angulaire est obtenu simplement en déterminant les états logiques « VRAI » ou « FAUX » des deux relations indiquées ci-dessous:

$$(A) \quad \text{lorsque } E_{vt} > 0 \text{ t/mn} : [(S_{pp} < TRIG\_PP) \text{ OU } (C_{pp} < TRIG\_PP)] \; ;$$

$$(B) \quad \text{lorsque } E_{vt} \geq 0 \text{ t/mn} : [(V_{ref} - \Delta < S < V_{ref} + \Delta) \text{ ET } (V_{ref} - \Delta < C < V_{ref} + \Delta)].$$

Avec :

- $E_{vt}$ état de la vitesse atteint par le rotor de l'alterno-démarreur exprimé en tours/minute (t/mn)
- « OU » et « ET » les opérateurs logiques de disjonction non exclusive et de conjonction, respectivement ;
- S la valeur instantanée du signal sinus ;
- C la valeur instantanée du signal cosinus ;
- $S_{pp}$ l'amplitude maximale crête à crête du signal sinus ;
- $C_{pp}$ l'amplitude maximale crête à crête du signal cosinus ;
- *Vref* une valeur de décalage (ou « *offset* » selon la terminologie anglo-saxonne couramment utilisée) pour un alignement de conversion analogique-numérique mise en oeuvre dans la chaîne de rétroaction ;
- *TRIG_PP* et $\Delta$ deux valeurs de seuils.

Si les relations (A) et/ou (B) sont vérifiées, c'est-à-dire à l'état logique "VRAI", cet état est caractéristique d'au moins un état défectueux des sondes de mesure de position angulaire ou, pour le moins, des circuits électriques/électroniques périphériques de ces sondes (connexions électriques, alimentation en énergie électrique, etc.) et de la cible magnétique elle-même.

La valeur de seuil *TRIG_PP* est obtenue par la méthode statistique dite de « Monte-Carlo ». Pour ce faire, dans une phase préliminaire du procédé, un modèle mathématique global du système « alterno-démareur-boucle de tracking» est créé et des modifications aléatoires sont appliquées à ce modèle. Un traitement mathématique permet de calculer la valeur de seuil *TRIG_PP* précitée à partir de cette distribution d'états.

Ces différents paramètres seront décrits et précisés de façon plus détaillée ci-après.

L'invention présente donc de nombreux avantages et parmi lesquels :

Le diagnostic des défauts de fonctionnement dus aux sondes de mesure de position angulaire nécessite seulement l'exécution d'opérations logiques élémentaires, à savoir la détermination des états logiques « vrai » ou « faux » de deux inéquations.

Les paramètres figurant dans les inéquations sont, pour l'essentiel, déjà acquis pour les besoins propres à la boucle de tracking. Notamment, les deux signaux sinus et cosinus sont nécessaires pour déterminer la valeur $\theta$ de la position angulaire du rotor. La détermination des états logiques précités peut être obtenue simplement, dans un mode de réalisation préféré, en faisant appel à l'un des calculateurs embarqués présents sur tout véhicule de conception moderne.

Le calcul des valeurs de seuils *TRIG_PP*, $\Delta$ et $V_{ref}$ précités est réalisé lors d'une phase préliminaire unique, typiquement lors de la conception du système, et ne nécessite aucun circuit additionnel embarqué dans le véhicule, ni même de modifications des pièces de logiciels implémentés dans les mémoires de programmes des calculateurs numériques embarqués.

L'invention a donc pour objet principal un procédé de diagnostic de défauts de fonctionnement présentés par des sondes mises en oeuvre dans un système de mesure de la position angulaire d'un rotor d'une machine électrique tournante polyphasée comprenant un stator, les sondes étant fixes par rapport au stator et aptes à détecter un champ magnétique et à délivrer des premiers signaux représentatifs de ce champ magnétique, caractérisé en ce qu'il comprend au moins une étape de génération, à partir de combinaisons linéaires desdits premiers signaux, d'au moins une paire de premier et second signaux sinusoïdaux, déphasés d'une valeur déterminée différente de zéro et de 180°, représentant une position angulaire du rotor, une étape de détermination d'un premier paramètre dit d'état de vitesse $E_{vt}$ du rotor, prenant deux valeurs $E_{vt} > 0$ ou $E_{vt} \geq 0$, une étape de calcul des première et seconde relations suivantes :

-

$$[(S_{pp} < TRIG\_PP) \text{ OU } (C_{pp} < TRIG\_PP)]$$

-

$$[(V_{ref} - \Delta < S < V_{ref} + \Delta) \text{ ET } (V_{ref} - \Delta < C < V_{ref} + \Delta)],$$

dans lesquelles « OU » est l'opérateur logique de disjonction non exclusive et "ET" l'opérateur logique de conjonction, $S_{pp}$ l'amplitude maximale crête à crête et S la valeur instantanée dudit premier signal sinusoïdal, $C_{pp}$ l'amplitude maximale crête à crête et C la valeur instantanée dudit second signal sinusoïdal, TRIG_PP, $V_{ref}$ et $\Delta$ trois valeurs de seuil déterminées,

une étape, lorsque ledit paramètre état de vitesse $E_{vt}$ est supérieur à zéro, de détermination de l'état logique "VRAI" ou "FAUX" de ladite première relation, de génération d'un signal indiquant un fonctionnement sans défaut desdites sondes lorsque cette première relation n'est pas vérifiée et un défaut de fonctionnement d'au moins une de ces sondes lorsqu'elle est vérifiée, et une étape, lorsque ledit paramètre état de vitesse $E_{vt}$ est égal ou supérieur à zéro, de détermination de l'état logique "VRAI" ou "FAUX" de ladite deuxième relation, de génération d'un signal indiquant un fonctionnement sans défaut desdites sondes lorsque cette seconde relation n'est pas vérifiée et un défaut de fonctionnement d'au moins une de ces sondes lorsqu'elle est vérifiée.

L'invention a encore pour objet un dispositif pour la mise en oeuvre de ce procédé.

L'invention va maintenant être décrite de façon plus détaillée en se référant aux dessins annexés, parmi lesquels :

- la figure 1 est un diagramme illustrant schématiquement un exemple de courbe montrant l'évolution de la vitesse de rotation du rotor d'une machine tournante polyphasée en fonction du temps et simulant divers défauts des sondes de mesure de position angulaire de ce rotor ;
- la figure 2 illustre schématiquement un exemple de réalisation d'un système de détermination de la position angulaire d'un rotor d'un alterno-démarreur incorporant un dispositif de diagnostic des défauts de fonctionnement des sondes de mesure de position angulaire selon un mode de réalisation préféré de l'invention ; et
- La figure 3 est un diagramme montrant l'évolution en fonction du temps d'une paire de signaux obtenus par des combinaisons linéaires des signaux générés par les sondes de mesure de position angulaire du système de la figure 1 ;
- La figure 4 est un diagramme illustrant une distribution de valeurs de seuils obtenues par la méthode de Monte-Carlo en fonction de la température de façon à déterminer des plages de seuils pour obtenir un diagnostic d'erreur lorsque la vitesse de rotation du rotor n'est pas nulle.

Dans ce qui suit, sans en limiter en quoi que ce soit sa portée, on se placera ci-après dans le cadre de l'application préférée de l'invention, sauf mention contraire, c'est-à-dire dans le cas d'un système de détermination de la position angulaire d'un rotor d'un alterno-démarreur mettant en oeuvre un asservissement entre une position angulaire mesurée et une position angulaire estimée.

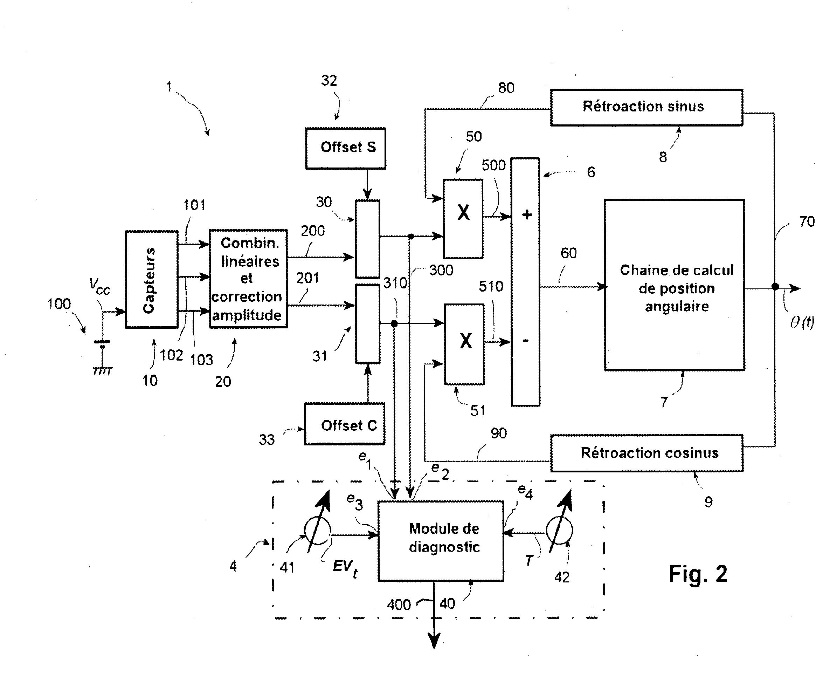

La figure 2 illustre un exemple de système 1 de détermination de la position angulaire d'un rotor d'un alterno-démarreur conforme à l'architecture décrite dans la demande de brevet français N° 0853359 précitée. Elle incorpore en outre un dispositif 4 de diagnostic des défauts de fonctionnement des sondes de mesure de position angulaire selon un mode de réalisation préféré de l'invention.

L'alterno-démarreur (non illustré sur cette figure) peut être d'un type tout à fait similaire à l'art connu, voire identique. Les sondes du bloc 10 sont constituées, par exemple, par trois capteurs à effet Hall disposés à 120° électrique pour une machine tournante triphasée. On a symbolisé l'alimentation en énergie électrique de ces sondes 10 par une batterie 100 délivrant une tension $V_{cc}$, par exemple +5V.

Les sondes 10 délivrent, sur les liaisons de sortie, 101 à 103, trois signaux « bruts », que l'on dénommera $VS_1$ à $VS_3$, et qui sont transmis à un module 20 de combinaisons linéaires et de correction d'amplitude générant sur ses sorties, liaisons 200 et 201, deux signaux transmis à des modules supplémentaires 30 et 31.

Les modules, 30 et 31, appliquent à ces signaux des valeurs d'offsets, délivrés par les modules 32 et 33, respectivement. Les modules, 32 et 33, peuvent être constitués par des circuits de mémoire contenant des valeurs d'offset prédéterminées.

Sur les sorties, 300 et 310, des modules 30 et 31, on dispose donc de deux signaux sinusoïdaux, centrés sur un axe (c'est-à-dire sans offset) et de même amplitude, déphasés d'une valeur $\varphi$ déterminée non triviale, c'est-à-dire différente de 0° ou 180°, avantageusement 90°, signaux que l'on appellera ci-après $S_{sin}$ et $C_{cos}$.

Ces deux composantes, dérivées des signaux mesurés par les capteurs 10 et mises en forme pour s'approcher au mieux de fonctions sinusoïdales, sont transmises, chacune, à des premières entrées de multiplicateurs 50 et 51, respectivement, via les liaisons 300 et 310. Elles représentent donc deux instances de la valeur instantanée de la position angulaire mesurée du rotor. Ces multiplicateurs, 50 et 51, reçoivent sur des secondes entrées, deux composantes dérivées de la valeur instantanée d'une valeur de position angulaire estimée θ(t) par deux branches de rétroaction 8 et 9 (liaisons 80 et 90), que l'on dénommera "Rétroaction sinus" et "Rétroaction cosinus", respectivement. Les signaux en sortie des multiplicateurs, 50 et 51, sont transmis, par les liaisons 500 et 510, aux entrées d'un soustracteur 6 dont les signaux de sortie (liaison 60) sont transmis à une chaîne 7 de calcul de position angulaire. Les signaux de sortie sur la liaison 70 représentent la valeur instantanée de la position angulaire estimée θ(t) et sont réinjectés vers les secondes entrées des multiplicateurs, 50 et 51, via les circuits de rétroaction, 8 et 9 précités.

Les circuits constitutifs de cette architecture dotée d'une boucle de tracking sont agencés de telle sorte que la relation (1) rappelée dans le préambule de la présente description soit satisfaite.

Jusqu'à ce point, l'architecture du système 1 de détermination de la position angulaire d'un rotor d'un alterno-démarreur qui vient d'être décrite est commune à un exemple de réalisation de l'Art Connu.

On va maintenant décrire un mode de réalisation préféré de dispositif 4 de diagnostic de défauts de fonctionnement des sondes 10 de détermination de la position angulaire du rotor qui s'incorpore dans ce système 1 et, de façon plus générale, dans de nombreux autres systèmes mettant en oeuvre des sondes de détermination de la position angulaire d'un rotor d'une machine polyphasée. Il est seulement nécessaire, comme il va l'être montré, que l'on dispose d'au moins une paire de signaux obtenus à partir de combinaisons linéaires des signaux polyphasés générés par les sondes, ce qui est connu en soi et n'est pas spécifique à l'invention.

Le dispositif 4 de diagnostic de défauts de fonctionnement des sondes 10 de détermination de la position angulaire du rotor propre à l'invention comprend un module de diagnostic 40 proprement dit et des moyens 41 indiquant la vitesse du rotor, plus précisément un état de vitesse $EV_t$.

En effet, comme il a été rappelé, conformément à une caractéristique avantageuse du procédé de l'invention, il n'est pas nécessaire de connaître la valeur précise de la vitesse, mais seulement discriminer des états distincts.

Le module de diagnostic 40 reçoit sur des première et deuxième entrées, $e_1$ et $e_2$, les signaux présents sur les sorties 300 et 301, que l'on a dénommés $S_{sin}$ et $C_{cos}$. Le signal représentant l'état de vitesse $EV_t$ est transmis sur une troisième entrée $e_3$ du module 40.

Le module 40 génère en sortie un signal 400 indiquant la présence ou non de défauts de fonctionnement de sondes, dont la nature va être précisée ci-après.

Ces trois séries de signaux constituent l'essentiel des informations qu'il est nécessaire de connaître en régime de croisière pour obtenir un diagnostic des principaux défauts de fonctionnement des sondes de détermination de la position angulaire d'un rotor.

Comme il a été rappelé, ce diagnostic est obtenu en déterminant les états logiques « VRAI » ou « FAUX » des relations (A) et (B) ci-dessous :

$$(A) \quad \text{Lorsque } E_{vt} > 0 \text{ t/mn : } [(S_{pp} < TRIG\_PP) \text{ OU } (C_{pp} < TRIG\_PP)]$$

$$(B) \quad \text{Lorsque } E_{vt} \geq 0 \text{ t/mn : } [(V_{ref} - \Delta < S < V_{ref} + \Delta) \text{ ET } (V_{ref} - \Delta < C < V_{ref} + \Delta)]$$

Les différents paramètres figurant dans ces relations ont été précisés dans le préambule de la présente description et il est inutile de les détailler de nouveau.

Un état logique des relations (A) et/ou (B) à l'état «VRAI» indique au moins un état défectueux des sondes à effet Hall 10 ou de leurs circuits électriques/électroniques périphériques (connexions électrique, circuits d'alimentation électrique 100, etc.).

Lorsque la relation (A) est vérifiée, c'est-à-dire lorsque $E_{vt} \neq 0$ t/mn, les principaux états défectueux diagnostiqués obtenus sont les suivants (ce pour une plage de vitesse de rotation $E_{vt}$ allant d'un nombre de tours par minute très faible à un nombre de tour par minute élevé, une seule période de rotation étant suffisante pour effectuer le diagnostic) :

- $S_1$ court-circuitée, c'est-à-dire par exemple connectée à un potentiel à 0V ou 5V, en supposant que ces sondes sont alimentées par la source d'alimentation électrique 100 : $V_{cc}$ = +5V ;
- $S_1$ déconnectée ;
- $S_2$ ou $S_3$ court-circuitées par exemple à 0V, +5V ou bien entre elles ;

- $S_2$ ou $S3$ déconnectées ;
- $S_1$ et $S_2$ court-circuités par exemple à 0V, +5V ou bien entre elles ;
- $S_1$ et ($S_2$ ou $S_3$) déconnectées ;
- $S_1$ et $S_2$ et $S_3$ court-circuités par exemple à 0V, +5V ou bien entre elles ;
- $S_1$ et $S_2$ et $S_3$ déconnectées ;
- source d'alimentation en énergie électrique 100 défectueuse, ce qui inclut notamment une déconnexion de la source, un court-circuit à la terre (masse du dispositif) ou un court-circuit à la tension $V_{cc}$ (+5V dans l'exemple décrit) ;
- une détection d'impédance de court-circuit, typiquement inférieure à 5KΩ, ce naturellement en fonction de différents paramètres liés à un mode de réalisations pratique du dispositif.

Lorsque la relation (B) est vérifiée, y compris à vitesse nulle, les principaux états défectueux diagnostiqués obtenus sont les suivants:

- $S_1$ et $S_2$ et $S_3$ déconnectées ;
- $S_1$ et $S_2$ et $S_3$ court-circuités par exemple à 0V ou +5V;
- $S_1$ et $S_2$ et $S_3$ court-circuités par exemple à 0V, +5V ou bien entre elles;
- source d'alimentation en énergie électrique 100 défectueuse.

Une autre information qu'il est nécessaire de connaître est le délai minimum qui doit s'écouler après démarrage avant que l'on puisse effectuer une mesure crête à crête significative des signaux $S_{sin}$ et $C_{cos}$. Cette information dépend du profil de vitesse présenté par le système.

Pour fixer les idées, on va supposer que $S_{\sin} = V \sin\left(\theta + \dfrac{\pi}{6}\right)$ et $S_{\cos} = V \sin\left(\theta - \dfrac{\pi}{6}\right)$, de façon à obtenir une période complète pour les deux signaux $S_{sin}$ et $C_{cos}$ avec $\theta_{\min} = \pi + \dfrac{\pi}{6}$. Toujours pour fixer les idées, on suppose qu'une rampe minimum de vitesse permet de passer d'une vitesse de rotation du rotor de 0 à 300 t/mn en 0,6 secondes. Dans ces conditions, le calcul montre qu'on atteint un régime de croisière de 500 t/mn en 180 ms environ.

La figure 3 est un diagramme montrant l'évolution des signaux $S_{sin}$ et $C_{cos}$ en fonction du temps. L'axe des ordonnées (tensions $V$) est gradué en volts et l'axe des abscisses (temps t) est gradué en secondes. Dans l'exemple décrit, après une période transitoire, on atteint un régime de croisière $t$=0,1802 secondes.

Il s'ensuit que pour le cas $E_{vt} > 0$ (relation (A)), un diagnostic significatif peut être obtenu après un délai minimum d'environ 180 ms.

*A priori*, ce paramètre est connu une fois pour toute pour un alterno-démarreur de caractéristiques physiques et électriques données. Il n'est donc pas nécessaire de prévoir de moyens de mesures particuliers embarqués sur le véhicule.

Il en est de même pour la valeur de seuil, *TRIG_PP* figurant dans la relation (A), comme il a été rappelé dans le préambule de la présente description.

La détermination de ce paramètre est effectuée lors une phase préliminaire du procédé, *a priori* une fois pour toute lors de la conception d'un système de caractéristiques physiques et électriques données.

Pour ce faire, pour obtenir la valeur de seuil *TRIG_PP*, on peut faire appel à une méthode statistique, par exemple avantageusement à l'algorithme dit de "Monte-Carlo". Cet algorithme est très général et peut s'appliquer à tout modèle pour lequel il est possible d'effectuer des modifications aléatoires de ce modèle et d'associer une variable dite d'énergie à chacune des modifications. La théorie montre qu'une fois qu'un l'état stationnaire est atteint, la distribution des états correspond à une distribution de Boltzman.

Dans le cadre du procédé de l'invention, lors d'une phase initiale, un modèle mathématique global du système « partie cible magnétique de l'alterno-démareur - boucle de tracking» est créé et des modifications aléatoires sont appliquées à ce modèle de façon à obtenir la distribution d'états de Boltzman précitée lorsqu'un état stationnaire est atteint. Un traitement mathématique permet de calculer la valeur de seuil *TRIG_PP* à partir de cette distribution d'états.

Deux cas principaux se présentent :

- Le matériau magnétique cible est insensible ou peu sensible aux variations de température, pour le moins dans un domaine de fonctionnement normal du système : on peut alors adopter une valeur constante pour la valeur de seuil *TRIG_PP*. C'est le cas par exemple d'un matériau cible magnétique à base de terre rare.
- Le matériau magnétique cible est sensible aux variations de température. Il est alors nécessaire de tenir compte de la température et la fonction décrivant le seuil est une fonction linéaire de la forme :

$$TRIG\_PP = pT + K_s \qquad (2)$$

Avec $p$ constante de proportionnalité (pente), $T$ en °C et $K_S$ une valeur constante de seuil. C'est le cas, par exemple, d'un matériau cible magnétique magnétique à base de ferrite.

Dans le premier cas, pour connaître la température instantanée du matériau magnétique, on prévoit une sonde de mesure ou estimateur de température 42 comme illustré schématiquement sur la figure 2. le signal de sortie de cette sonde de mesure de température 42 est transmis à une quatrième entrée $e_4$ du module de diagnostic 40.

Bien que l'on ait représenté ce module de diagnostic sous la forme de circuits de calcul autonomes, c'est-à-dire d'une logique câblée, effectuant la résolution des deux inéquations (A) et délivrant en sortie un signal de diagnostic $V_{diag}$, on doit bien comprendre que les calculs nécessaires à l'élaboration du diagnostic de bon fonctionnement ou de dysfonctionnement peuvent être effectués par d'autres moyens. De façon avantageuse, il est possible, notamment, de recourir à l'un des calculateurs embarqués présents sur tout véhicule de conception moderne, ce simplement en adaptant les programmes (microprogrammes, etc.) implémentés dans ce calculateur et en prévoyant des circuits d'interface adaptés. Ce mode de réalisation ne nécessite que peu de modifications et s'avère ni complexe, ni onéreux. Il présente en outre une grande souplesse, car il est bien connu de l'Homme du Métier que les programmes peuvent être mis à jour en tant que de besoin (corrections de bogues, ajout de fonctions, etc.).

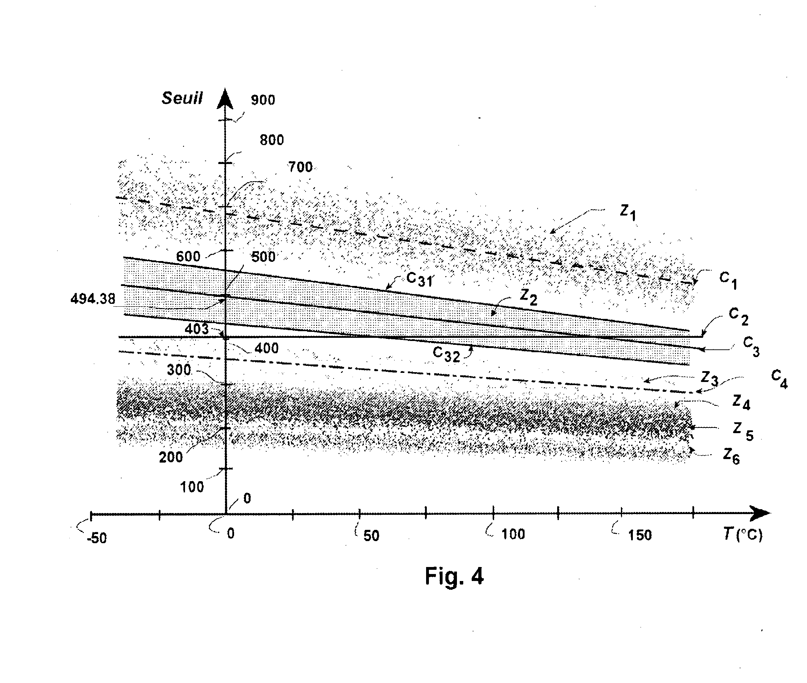

La figure 4 est un diagramme illustrant une distribution de valeurs de seuils obtenues par la méthode de Monte-Carlo précitée en fonction de la température. L'axe des coordonnées est gradué en valeurs seuil, de 0 à 900, et l'axe des abscisses est gradué en °C, de -50 à +175 °C, dans l'exemple décrit, 3000 mesures crêtes à crête ayant été réalisées.

Le diagramme de la figure 4 présente plusieurs zones distinctes, caractéristiques de défauts particuliers de fonctionnement des sondes ou des circuits périphériques à ces sondes :

- zone $Z_1$ : les points de mesure sont distribués autour d'une droite à pente négative $C_1$. Dans cette zone $Z_1$, les sondes 10 et/ou leurs circuits périphériques (connexions électriques, circuit d'alimentation 100, etc.) ne présentent aucun défaut.
- Zone $Z_3$ : les points de mesures sont distribués autour d'une droite $C_4$ à pente négative. Dans cette zone, la sonde $S_1$ présente un défaut, elle est déconnectée (circuit ouvert).
- Zone $Z_4$ : dans cette zone, la sonde $S_1$ est connectée en permanence au potentiel $V_{cc}$ de la source d'alimentation 100 (+5V dans l'exemple décrit).
- Zone $Z_5$ : cette zone représente plusieurs distributions de points de mesure qui s'interpénètrent fortement et qui caractérisent divers défauts de fonctionnement de sondes ou de circuits périphériques de ces sondes : sonde $S_1$ ou sonde $S_2$ court-circuitée au potentiel zéro, sonde $S_2$ connectée en permanence au potentiel $V_{cc}$ de la source d'alimentation 100 (+5V dans l'exemple décrit), sondes $S_1$ et $S_2$ déconnectées (circuits ouverts), sondes $S_2$ et $S_3$ court-circuitées au potentiel zéro, sondes $S_1$ et $S_2$ court-circuitées, ou sondes $S_1$ et $S_2$ déconnectées (circuits ouverts).
- Zone $Z_6$ : dans cette zone, la sonde $S_2$ est déconnectée (circuit ouvert).

On doit noter que les frontières entre zones ne sont pas franches. Il s'ensuit que des nuages de points de mesures sont communs à deux zones contiguës, notamment en ce qui concerne les zones $Z_4$ et $Z_5$.

De ces diverses mesures, on en déduit ce qui suit :

Dans le cas d'un matériau magnétique sensible à la température, de façon à obtenir une marge maximale pour la valeur de seuil, on rend cette valeur de seuil dépendante de la température. Pour fixer les idées, dans le cas de l'exemple retenu, la fonction linéaire (2) précitée représentant la valeur de seuil peut être la suivante :

$$TRIG\_PP = -0{,}6407 \times T + 494{,}38 \qquad (3)$$

Cette courbe est représentée sur le diagramme de la figure 4 par une droite $C_3$ à pente négative k = -0,6407 coupant l'axe des ordonnées à la valeur de seuil $K$ = 494,38.

Dans le cas d'un matériau magnétique insensible ou peu sensible aux variations de température, on adopte une valeur constante pour la valeur de seuil $TRIG\_PP$. Pour fixer les idées, dans l'exemple décrit, si on désire diagnostiquer à 100% tous les défauts de sondes, on peut retenir la valeur suivante : $TRIG\_PP$ = 449. A titre de compromis, on peut retenir une valeur un peu plus faible, quitte à ne pas détecter quelques cas de déconnexion de $S_1$ par exemple. Dans cette hypothèse, dans l'exemple décrit, on peut retenir la valeur suivante : $TRIG\_PP$ = 403. Ce dernier cas correspond à la droite horizontale $C_2$ illustrée sur la figure 4 qui coupe l'axe des ordonnées à la valeur de seuil $TRIG\_PP$ = 403.

Le tableau 1 placé en fin de description illustre ces deux hypothèses et les résultats obtenus en ce qui concerne la probabilité de détection des divers défauts de sondes. Il en ressort que pour $TRIG\_PP$ = 403 moins de 1% des cas de défauts dus à la déconnection de $S_1$ n'est pas détecté.

Sur la figure 4, on a représenté une zone $Z_2$ délimitée par deux droites, $C_{31}$ et $C_{32}$, de pentes négatives situées de par et d'autre de la droite $C_3$ correspondant à la fonction (3) précitée. Cette zone $Z_2$ représente une zone de sécurité pour des marges de seuils assurant une détection à 100 % des défauts dus aux sondes. De façon plus précise, la droite $C_{32}$ assure un seuil minimum en fonction de la température $T$ permettant d'assurer cette détection à 100 %. La droite $C_{31}$ permet de borner les valeurs maximales de seuil à des valeurs acceptables, les plus faibles possibles. On constate que la droite $C_2$ sort de la marge de sécurité définie par la zone $Z_2$ pour les basses températures (gamme comprise entre -50 °C et +50 °C environ), ce qui explique que certains défauts ne sont pas détectés (moins de 1%) comme rappelés précédemment.

Lorsque l'état vitesse de rotation $E_{vt} \geq 0$, il est nécessaire de déterminer si la relation (B) est vérifiée (état logique "VRAI"). La relation (B) est vérifiée si les deux inéquations qui la composent sont simultanément vérifiées (fonction logique "ET"). Dans cette relation, le paramètre de seuil $TRIG\_PP$ n'intervient plus et il est inutile de disposer d'une information de température.

Par contre il est nécessaire de connaître deux autres valeurs de seuils, à savoir $V_{ref}$ et $\Delta$.

Les valeurs de seuils précités dépendent notamment des valeurs d'offset utilisées (figure 2 : circuits 332 et 33) pour générer les signaux $S_{sin}$ et $S_{cos}$ (figure 2 : sorties 300 et 310).

Pour fixer les idées, dans un mode de réalisation du système 1 de la figure 2, avec des valeurs numériques sur 10 bits, on peut adopter les valeurs typiques suivantes : $\Delta$ = 43 et $V_{ref}$ = 512. En adoptant de tels seuils, l'expérience montre que l'on détecte à 100% les déconnexions des trois sondes $S_1$ à $S_3$.

Dans un mode de réalisation supplémentaire non expressément illustré, il est possible d'affiner encore plus le diagnostic de défauts de fonctionnement des sondes de mesures de position angulaire du rotor. Ce but peut être atteint en augmentant le nombre de paires de signaux dérivés, par combinaisons linéaires, des signaux générés par ces sondes.

A la lecture de ce qui précède, on constate aisément que l'invention atteint bien les buts qu'elle s'est fixée, et qu'il est inutile de rappeler entièrement.

Le procédé conforme à l'invention permet notamment, comme il a été rappelé, de réaliser simplement un diagnostic des principaux défauts de fonctionnement des sondes de mesures de position angulaire du rotor, avec une grande fiabilité, sans nécessiter une augmentation significative de la complexité des circuits nécessaires à la mise en oeuvre de ce procédé. En effet, il s'intègre parfaitement dans des architectures de système de mesures de position angulaire du rotor de l'art connu en ne nécessitant que de légères modifications matérielles et/ou logicielles, ce qui ne conduit pas à un surcoût significatif.

Toutefois, l'invention n'est pas limitée aux seuls procédé et dispositif conforme à la réalisation explicitement décrite en regard au regard des figures 2 à 4, ni seulement à l'application préférée relative à la détermination de la position angulaire de la position du rotor d'un alterno-démarreur triphasé.

Sans sortir du cadre de l'invention, le dispositif s'applique à toute machine tournante polyphasée, par exemple biphasée, triphasée, hexaphasée, etc., en mode moteur et/ou alternateur comportant des sondes de mesure de la position angulaire du rotor par rapport au stator et pour laquelle on dispose d'au moins une paire de signaux déphasés de façon non triviale et obtenus par combinaisons linéaires des signaux polyphasés générés par ces sondes.

TABLEAU I

| Seuil $TRIG\_PP$ constant | = 403 | = 409 |
|---|---|---|
| **Défauts** | **% de non détection** | **% de non détection** |
| **Pas de défaut** | 0.0% | 0.0% |
| $S_1$ **= 0** | 0.0% | 0.0% |
| $S_1$ **= 5** | 0.0% | 0.0% |
| $S_1$ **déconnectée** | **0.97%** | 0.0% |
| $S_2$ **= 0** | 0.0% | 0.0% |
| $S_2$ **= 5** | 0.0% | 0.0% |
| $S_2$ **déconnectée** | 0.0% | 0.0% |
| $S_1$ **et** $S_2$ **= 0** | 0.0% | 0.0% |
| $S_2$ **et** $S_3$ **= 0** | 0.0% | 0.0% |
| $S_1$ **et** $S_2$ **déconnectées** | 0.0% | 0.0% |

(suite)

| Seuil *TRIG_PP* constant | = 403 | = 409 |
|---|---|---|
| **Défauts** | **% de non détection** | **% de non détection** |
| $S_1$ et $S_2$ court-circuitées | 0.0% | 0.0% |

**Revendications**

1. Procédé de diagnostic de défauts de fonctionnement présentés par des sondes mises en oeuvre dans un système de mesure de la position angulaire d'un rotor d'une machine électrique tournante polyphasée comprenant un stator, les sondes étant fixes par rapport au stator et aptes à détecter un champ magnétique et à délivrer des premiers signaux (101-103) représentatifs de ce champ magnétique, le procédé comprenant au moins une étape de génération, à partir de combinaisons linéaires desdits premiers signaux (101-103), d'au moins une paire de premier (200) et second (201) signaux sinusoïdaux, déphasés d'une valeur déterminée différente de zéro et de 180°, représentant une position angulaire du rotor, **caractérisé en ce qu'**il comprend également une étape de détermination d'un premier paramètre dit d'état de vitesse $E_{vt}$ du rotor, prenant deux valeurs $E_{vt} > 0$ ou $E_{vt} \geq 0$, une étape de calcul (40) des première et seconde relations suivantes :

   -

   $$[(S_{pp} < TRIG\_PP) \text{ OU } (C_{pp} < TRIG\_PP)]$$

   -

   $$[(V_{ref} - \Delta < S < V_{ref} + \Delta) \text{ ET } (V_{ref} - \Delta < C < V_{ref} + \Delta)],$$

   dans lesquelles « OU » est l'opérateur logique de disjonction non exclusive et "ET" l'opérateur logique de conjonction, $S_{pp}$ l'amplitude maximale crête à crête et S la valeur instantanée dudit premier signal sinusoïdal (200), $C_{pp}$ l'amplitude maximale crête à crête et C la valeur instantanée dudit second signal sinusoïdal (201), *TRIG_PP*, $V_{ref}$ et $\Delta$ trois valeurs de seuil déterminées, une étape, lorsque ledit paramètre état de vitesse $E_{vt}$ est supérieur à zéro, de détermination de l'état logique "VRAI" ou "FAUX" de ladite première relation, de génération d'un signal (400) indiquant un fonctionnement sans défaut desdites sondes lorsque cette première relation n'est pas vérifiée et un défaut de fonctionnement d'au moins une de ces sondes lorsqu'elle est vérifiée, et une étape, lorsque ledit paramètre état de vitesse $E_{vt}$ est égal ou supérieur à zéro, de détermination de l'état logique "VRAI" ou "FAUX" de ladite deuxième relation, de génération d'un signal (400) indiquant un fonctionnement sans défaut desdites sondes lorsque cette seconde relation n'est pas vérifiée et un défaut de fonctionnement d'au moins une de ces sondes lorsqu'elle est vérifiée.

2. Procédé selon la revendication 1, **caractérisé en ce qu'**il comprend une première phase préliminaire réalisée lors de la conception dudit système (1) de mesure de position angulaire comprenant une étape de construction d'un modèle mathématique dudit système, une étape d'application à ce modèle d'une pluralité de modifications aléatoires conformément à une méthode statistique dite de Monte-Carlo, de façon à obtenir une distribution d'états dite de Boltzman lorsqu'un état stationnaire est atteint et de déterminer à partir de ladite distribution ladite valeur de seuil prédéterminée *TRIG_PP*.

3. Procédé selon la revendication 1, **caractérisé en ce que** ledit système (1) de mesure de la position comprend une chaîne (7) de calcul de position angulaire comportant un convertisseur analogique-numérique et des circuits (32-33) appliquant des valeurs de décalage dites d'offset aux dits premier (200) et second (201) signaux sinusoïdaux, il comprend une deuxième phase préliminaire réalisée lors de la conception dudit système (1) de mesure de position angulaire comprenant une étape de détermination desdites valeurs de seuil prédéterminées, $V_{ref}$ et $\Delta$, à partir desdites valeurs de décalage d'offset et des caractéristiques électriques dudit convertisseur analogique-numérique.

4. Procédé selon la revendication 1, **caractérisé en ce qu'**il comprend une étape d'acquisition d'un paramètre dit de profil de vitesse dudit système (1) de mesure de position angulaire de rotor et une étape de calcul à partir dudit profil de vitesse d'un délai minimum permettant d'effectuer des mesures crête à crête significatives desdits premier et second signaux sinusoïdaux en dehors d'une période transitoire.

5. Procédé selon l'une des revendications 1 ou 2, **caractérisé en ce que** ladite machine électrique tournante polyphasée comportant un matériau magnétique insensible à des variations de température dans une gamme de fonctionnement prédéterminée dudit système (1) de mesure de la position angulaire de rotor, ledit seuil $TRIG\_PP$ est fixé à une valeur minimale constante ($C_2$) de manière à délimiter deux régions, une première région pour des valeurs supérieures au dit seuil caractéristique d'un fonctionnement sans défaut desdites sondes (10) et une seconde région pour des valeurs inférieures au dit seuil caractéristique de défauts de fonctionnement desdites sondes (10).

6. Procédé selon l'une des revendications 1 ou 2, **caractérisé en ce que** ladite machine électrique tournante polyphasée comportant un matériau magnétique sensible à des variation de température dans une gamme de fonctionnement prédéterminée dudit système (1) de mesure de la position angulaire de rotor, il comprend une étape de mesure ou estimation de la température (42) dudit matériau magnétique et une étape consistant à rendre ledit seuil $TRIG\_PP$ dépendant de la température, de manière à avoir une fonction linéaire de la forme $TRIG\_PP = pT + K_s$, avec $p$ pente de la droite ($C_3$) représentant ladite fonction linéaire, $T$ la température et $K_s$ une constante, de manière à délimiter deux régions, un première région pour des valeurs située au-dessus de ladite droite ($C_3$) caractéristique d'un fonctionnement sans défaut desdites sondes (10) et une seconde région pour des valeurs situées au-dessous de ladite droite ($C_3$) caractéristique de défauts de fonctionnement desdites sondes (10).

7. Dispositif pour la mise en oeuvre du procédé selon l'une quelconque des revendications précédentes, **caractérisé en ce qu'**il comprend des moyens (41) pour mesurer la vitesse dudit rotor et générer un signal représentant ledit état de vitesse $E_{vt}$, un module électronique de diagnostic (40) recevant au moins lesdits premier (200) et second (201) signaux sinusoïdaux sur des première ($e_1$) et seconde ($e_3$) entrées et un signal représentant ledit état de vitesse $E_{vt}$ sur une troisième entrée ($e_3$), ledit module de diagnostic (40) comprenant des moyens pour élaborer à partir de ces signaux et desdits seuils prédéterminés lesdites première et seconde relation, pour vérifier les états logiques "VRAI" ou "FAUX" de ces relations et pour générer en sortie (400) un signal représentatif d'un fonctionnement sans défaut desdites sondes (10) ou de défauts de fonctionnement d'au moins une desdites sondes (10) selon lesdits états logiques.

8. Dispositif selon la revendication 8, **caractérisé en ce que** ladite machine électrique tournante polyphasée comportant un matériau magnétique sensible à des variation de température dans une gamme de fonctionnement prédéterminée dudit système (1) de mesure de la position angulaire de rotor, il comprend en outre des moyens (42) de mesure ou estimation de la température de ce matériau délivrant un signal représentatif ($T$) de cette température transmise à une quatrième entrée ($e_4$) dudit module de diagnostic (40) et **en ce que** ce module de diagnostic (40) génère une valeur de seuil $TRIG\_PP$ obéissant à une fonction linéaire de la forme $TRIG\_PP = pT + K_s$, avec $p$ pente de la droite représentant ladite fonction linéaire, T la température et $K_s$ une constante.

9. Dispositif selon l'une des revendications 7 ou 8, **caractérisé en ce que** ladite machine électrique tournante polyphasée étant un machine triphasée, ledit système (1) de mesure de position angulaire du rotor comprend trois sondes (10), dites $S_1$ à $S_3$, respectivement, **en ce qu'**il comprend en outre des moyens (100) d'alimentation en énergie électrique desdites sondes (10) délivrant une tension d'amplitude déterminée $V_{cc}$, **en ce que** ledit dispositif, lorsque ladite première relation est vérifiée, génère en sortie (400) un signal de diagnostic indiquant une nature de défaut comprise parmi les catégories suivantes : la sonde $S_1$ est court-circuitée en étant reliée à un potentiel déterminée (0V ou $V_{cc}$), la sonde $S_1$ est déconnectée, les sondes $S_2$ ou $S_3$ sont court-circuitées en étant reliées à un potentiel déterminée (0V ou $V_{cc}$), ou entre elles, les sondes $S_1$ et ($S_2$ ou $S_3$) sont déconnectées, les sondes $S_1$ et $S_2$ et $S_3$ sont court-circuitées en étant reliées à un potentiel déterminée (0V ou $V_{cc}$), ou entre elles, les sondes $S_1$ et $S_2$ et $S_3$ sont déconnectées ou lesdits moyens (100) d'alimentation en énergie électrique sont défectueux.

10. Dispositif selon l'une des revendications 7 ou 8, **caractérisé en ce que** ladite machine électrique tournante polyphasée étant un machine triphasée, ledit système de mesure de position angulaire du rotor comprend trois sondes (10), dites $S_1$ à $S_3$, respectivement, **en ce qu'**il comprend en outre des moyens (100) d'alimentation en énergie électrique desdites sondes (10) délivrant une tension d'amplitude déterminée $V_{cc}$, **en ce que** ledit dispositif, lorsque ladite seconde relation est vérifiée, génère en sortie (400) un signal de diagnostic indiquant une nature de défaut comprise parmi les catégories suivantes : les sondes $S_1$ et $S_2$ et $S_3$ sont déconnectées, les sondes $S_1$ et $S_2$ et $S_3$ sont court-circuitées en étant reliées un potentiel déterminée (0V ou $V_{cc}$), les sondes $S_1$ et $S_2$ et $S_3$ court-circuitées en étant reliées à un potentiel déterminée (0V ou $V_{cc}$), ou entre elles ou lesdits moyens (100) d'alimentation en énergie électrique sont défectueux.

**11.** Dispositif selon l'une quelconque des revendications 7 à 10, **caractérisé en ce que** lesdites sondes (10) sont constituées par des capteurs à effet Hall.

**12.** Dispositif selon l'une quelconque des revendications 7 à 11, **caractérisé en ce que** ladite machine tournante polyphasée est un alterno-démarreur.

**13.** Dispositif selon l'une quelconque des revendications 7 à 12, **caractérisé en ce que** ledit module de diagnostic (40) est constitué par un calculateur numérique embarqué à programme enregistré.

**Patentansprüche**

**1.** Verfahren zur Diagnose von Betriebsstörungen bei Sonden, die in einem System zur Messung der Winkelstellung eines Rotors einer einen Stator enthaltenden mehrphasigen drehenden elektrischen Maschine verwendet werden, wobei die Sonden bezüglich des Stators ortfest sind und ein Magnetfeld erfassen und erste für dieses Magnetfeld repräsentative Signale (101-103) liefern können, wobei das Verfahren mindestens einen Schritt der Erzeugung, ausgehend von linearen Kombinationen der ersten Signale (101-103), mindestens eines Paars von ersten (200) und zweiten (201) Sinussignalen enthält, die um einen bestimmten Wert anders als Null und 180° phasenverschoben sind, die eine Winkelstellung des Rotors darstellen, **dadurch gekennzeichnet, dass** es ebenfalls einen Schritt der Bestimmung eines ersten, Geschwindigkeitszustand $E_{vt}$ des Rotors genannten, Parameters, der zwei Werte $E_{vt} > 0$ oder $E_{vt} \geq 0$ annimmt, einen Schritt der Berechnung (40) der folgenden ersten und zweiten Beziehungen:

-

$$[(S_{pp} < TRIG\_PP) \text{ ODER } (C_{pp} < TRIG\_PP)]$$

-

$$[(V_{ref} - \Delta < S < V_{ref} + \Delta) \text{ UND } (V_{ref} - \Delta < C < V_{ref} + \Delta)],$$

in denen «ODER» der logische nicht-exklusive Disjunktionsoperator und "UND" der logische Konjunktionsoperator, $S_{pp}$ die maximale Spitze-Spitze-Amplitude und S der Augenblickswert des ersten Sinussignals (200), $C_{pp}$ die maximale Spitze-Spitze-Amplitude und C der Augenblickswert des zweiten Sinussignals (201) ist, TRIG_PP, $V_{ref}$ und $\Delta$ drei bestimmte Schwellwerte sind, einen Schritt, wenn der Parameter Geschwindigkeitszustand $E_{vt}$ größer als Null ist, der Bestimmung des logischen Zustands "WAHR" oder "FALSCH" der ersten Beziehung, der Erzeugung eines Signals (400), das einen störungsfreien Betrieb der Sonden, wenn diese erste Beziehung nicht erfüllt ist, und eine Betriebsstörung mindestens einer dieser Sonden anzeigt, wenn sie erfüllt ist, und einen Schritt, wenn der Parameter Geschwindigkeitszustand $E_{vt}$ gleich oder größer als Null ist, der Bestimmung des logischen Zustands "WAHR" oder "FALSCH" der zweiten Beziehung, der Erzeugung eines Signals (400) enthält, das einen störungsfreien Betrieb der Sonden, wenn diese zweite Beziehung nicht erfüllt ist, und eine Betriebsstörung mindestens einer dieser Sonden anzeigt, wenn sie erfüllt ist.

**2.** Verfahren nach Anspruch 1, **dadurch gekennzeichnet, dass** es eine bei der Entwicklung des Systems (1) zur Messung der Winkelstellung durchgeführte erste Vorphase enthält, die einen Schritt der Konstruktion eines mathematischen Modells des Systems, einen Schritt der Anwendung an dieses Modell einer Vielzahl von Zufallsänderungen gemäß einer statistischen so genannten Monte-Carlo-Methode enthält, um eine so genannte Boltzman-Zustandsverteilung zu erhalten, wenn ein stationärer Zustand erreicht ist, und ausgehend von der Verteilung den vorbestimmten Schwellwert TRIG_PP zu bestimmen.

**3.** Verfahren nach Anspruch 1, **dadurch gekennzeichnet, dass**, das System (1) zur Messung der Stellung eine Rechenkette (7) der Winkelstellung enthält, die einen Analog-Digital-Wandler und Schaltungen (32-33) aufweist, die so genannte Offset-Verschiebungswerte an die ersten (200) und zweiten (201) Sinussignale anwenden, das System eine bei der Entwicklung des Systems (1) zur Messung der Winkelstellung durchgeführte zweite Vorphase enthält, die einen Schritt der Bestimmung der vorbestimmten Schwellwerte $V_{ref}$ und $\Delta$ ausgehend von den Offset-Verschiebungswerten und den elektrischen Eigenschaften des Analog-DigitalWandlers enthält.

4. Verfahren nach Anspruch 1, **dadurch gekennzeichnet, dass** es einen Schritt der Erfassung eines Geschwindigkeitsprofil genannten Parameters des Systems (1) zur Winkelstellungsmessung des Rotors und einen Schritt der Berechnung ausgehend von dem Geschwindigkeitsprofil einer Mindestverzögerung enthält, der es ermöglicht, signifikante Spitze-Spitze-Messungen der ersten und zweiten Sinussignale außerhalb einer Übergangsperiode auszuführen.

5. Verfahren nach einem der Ansprüche 1 oder 2, **dadurch gekennzeichnet, dass**, wenn die mehrphasige drehende elektrische Maschine ein für Temperaturschwankungen in einem vorbestimmten Betriebsbereich des Systems (1) zur Messung der Rotorwinkelstellung unempfindliches magnetisches Material aufweist, die Schwelle TRIG_PP auf einen konstanten minimalen Wert ($C_2$) festgelegt wird, um zwei Bereiche zu begrenzen, einen ersten Bereich für Werte oberhalb der charakteristischen Schwelle eines störungsfreien Betriebs der Sonden (10) und einen zweiten Bereich für Werte unterhalb der charakteristischen Schwelle von Betriebsstörungen der Sonden (10).

6. Verfahren nach einem der Ansprüche 1 oder 2, **dadurch gekennzeichnet, dass** es, wenn die mehrphasige drehende elektrische Maschine ein für Temperaturschwankungen in einem vorbestimmten Betriebsbereich des Systems (1) zur Messung der Rotorwinkelstellung empfindliches magnetisches Material aufweist, einen Schritt der Messung oder Schätzung der Temperatur (42) des magnetischen Materials und einen Schritt enthält, der darin besteht, die Schwelle TRIG_PP von der Temperatur abhängig zu machen, um eine lineare Funktion der Form TRIG_PP = pT + $K_s$ zu haben, mit p der Steigung der die lineare Funktion darstellenden Geraden ($C_3$), T der Temperatur und $K_s$ einer Konstanten, um zwei Bereich zu begrenzen, einen ersten Bereich für Werte oberhalb der Geraden ($C_3$) charakteristisch für einen störungsfreien Betrieb der Sonden (10) und einen zweiten Bereich für Werte unterhalb der Geraden ($C_3$) charakteristisch für Betriebsstörungen der Sonden (10).

7. Vorrichtung zur Durchführung des Verfahrens nach einem der vorhergehenden Ansprüche, **dadurch gekennzeichnet, dass** sie Einrichtungen (41) zur Messung der Geschwindigkeit des Rotors und zur Erzeugung eines Signals enthält, das den Geschwindigkeitszustand $E_{vt}$ darstellt, wobei ein elektronisches Diagnosemodul (40) mindestens die ersten (200) und zweiten (201) Sinussignale an ersten ($e_1$) und zweiten ($e_2$) Eingängen und ein den Geschwindigkeitszustand $E_{vt}$ darstellendes Signal an einem dritten Eingang ($e_3$) empfängt, wobei das Diagnosemodul (40) Einrichtungen enthält, um ausgehend von diesen Signalen und den vorbestimmten Schwellen die erste und zweite Beziehung zu erstellen, um die logischen Zustände "WAHR" oder "FALSCH" dieser Beziehungen zu erfüllen und um am Ausgang (400) ein für einen störungsfreien Betrieb der Sonden (10) oder für Betriebsstörungen mindestens einer der Sonden (10) gemäß den logischen Zuständen repräsentatives Signal zu erzeugen.

8. Vorrichtung nach Anspruch 8, **dadurch gekennzeichnet, dass** sie, wenn die mehrphasige drehende elektrische Maschine ein für Temperaturschwankungen in einem vorbestimmten Betriebsbereich des Systems (1) zur Messung der Rotorwinkelstellung empfindliches magnetisches Material aufweist, außerdem Einrichtungen (42) zur Messung oder Schätzung der Temperatur dieses Materials enthält, die ein für diese Temperatur repräsentatives Signal (T) liefern, das an einen vierten Eingang ($e_4$) des Diagnosemoduls (40) übertragen wird, und dass dieses Diagnosemodul (40) einen Schwellwert TRIG_PP erzeugt, der einer linearen Funktion der Form TRIG_PP = pT + $K_s$ folgt, mit p der Steigung der die lineare Funktion darstellenden Geraden, T der Temperatur und $K_s$ einer Konstanten.

9. Vorrichtung nach einem der Ansprüche 7 oder 8, **dadurch gekennzeichnet, dass**, wenn die mehrphasige drehende elektrische Maschine eine Dreiphasenmaschine ist, das System (1) zur Winkelstellungsmessung des Rotors drei Sonden (10) enthält, die mit $S_1$ bis $S_3$ bezeichnet sind, dass sie außerdem Einrichtungen (100) zur Stromversorgung der Sonden (10) enthält, die eine Spannung mit bestimmter Amplitude $V_{cc}$ liefern, dass die Vorrichtung, wenn die erste Beziehung erfüllt ist, am Ausgang (400) ein Diagnosesignal erzeugt, das eine Störungsbeschaffenheit anzeigt, die in den folgenden Kategorien enthalten ist: die Sonde $S_1$ ist kurzgeschlossen, indem sie mit einem bestimmten Potential (0V oder $V_{cc}$) verbunden ist, die Sonde $S_1$ ist abgeschaltet, die Sonden $S_2$ oder $S_3$ sind kurzgeschlossen, indem sie mit einem bestimmten Potential (0V oder $V_{cc}$) oder miteinander verbunden werden, die Sonden $S_1$ und ($S_2$ oder $S_3$) sind abgeschaltet, die Sonden $S_1$ und $S_2$ und $S_3$ sind kurzgeschlossen, indem sie mit einem vorbestimmten Potential (0V oder $V_{cc}$) oder miteinander verbunden sind, die Sonden $S_1$ und $S_2$ und $S_3$ sind abgeschaltet, oder die Stromversorgungseinrichtungen (100) sind defekt.

**10.** Vorrichtung nach einem der Ansprüche 7 oder 8, **dadurch gekennzeichnet, dass**, wenn die mehrphasige drehende elektrische Maschine eine Dreiphasenmaschine ist, das System zur Winkelstellungsmessung des Rotors drei Sonden (10) enthält, die mit $S_1$ bis $S_3$ bezeichnet sind, dass sie außerdem Einrichtungen (100) zur Stromversorgung der Sonden (10) enthält, die eine Spannung mit bestimmter Amplitude $V_{cc}$ liefern, dass die Vorrichtung, wenn die zweite Beziehung erfüllt ist, am Ausgang (400) ein Diagnosesignal erzeugt, das eine Störungsbeschaffenheit anzeigt, die in den folgenden Kategorien enthalten ist: die Sonden $S_1$ und $S_2$ und S3 sind abgeschaltet, die Sonden $S_1$ und $S_2$ und $S_3$ sind kurzgeschlossen, indem sie mit einem bestimmten Potential (0V oder $V_{cc}$) verbunden sind, die Sonden $S_1$ und $S_2$ und $S_3$ sind kurzgeschlossen, indem sie mit einem bestimmten Potential (0V oder $V_{cc}$) oder miteinander verbunden sind, oder die Stromversorgungseinrichtungen (100) sind defekt.

**11.** Vorrichtung nach einem der Ansprüche 7 bis 10, **dadurch gekennzeichnet, dass** die Sonden (10) aus Hall-Sensoren bestehen.

**12.** Vorrichtung nach einem der Ansprüche 7 bis 11, **dadurch gekennzeichnet, dass** die mehrphasige drehende Maschine ein Starter-Generator ist.

**13.** Vorrichtung nach einem der Ansprüche 7 bis 12, **dadurch gekennzeichnet, dass** das Diagnosemodul (40) aus einem eingebauten digitalen Rechner mit gespeichertem Programm besteht.

## Claims

**1.** Method for diagnosing operating faults exhibited by probes implemented in a system for measuring the angular position of a rotor of a polyphase rotating electric machine comprising a stator, the probes being fixed relative to the stator and suitable for detecting a magnetic field and for delivering first signals (101-103) representative of this magnetic field, the method comprising at least a step of generation, from linear combinations of said first signals (101-103), of at least one pair of first (200) and second (201) sinusoidal signals, phase-shifted by a determined value different from zero and from 180°, representing an angular position of the rotor, **characterized in that** it also comprises a step of determining a first parameter, called speed status $E_{vt}$ of the rotor, taking two values $E_{vt} > 0$ or $E_{vt} \geq 0$, a step of computation (40) of the following first and second relationships:

-

$$[(S_{pp} < TRIG\_PP) \text{ OR } (C_{pp} < TRIG\_PP)]$$

-

$$[(V_{ref} - \Delta < S < V_{ref} + \Delta) \text{ AND } (V_{ref} - \Delta < C < V_{ref} + \Delta)],$$

in which "OR" is the non-exclusive logical disjunction operator and "AND" the logical conjunction operator, $S_{pp}$ the maximum peak-to-peak amplitude and S the instantaneous value of said first sinusoidal signal (200), $C_{pp}$ the maximum peak-to-peak amplitude and C the instantaneous value of said second sinusoidal signal (201), and $TRIG\_PP$, $V_{ref}$ and $\Delta$ are three determined threshold values,
a step, when said speed status parameter $E_{vt}$ is greater than zero, of determining the "TRUE" or "FALSE" logic state of said first relationship, of generating a signal (400) indicating a fault-free operation of said probes when this first relationship is not verified and an operating fault of at least one of these probes when it is verified and a step, when said speed status parameter $E_{vt}$ is equal to or greater than zero, of determining the "TRUE" or "FALSE" logic state of said second relationship, of generating a signal (400) indicating a fault-free operation of said probes when this second relationship is not verified and an operating fault of at least one of these probes when it is verified.

**2.** Method according to Claim 1, **characterized in that** it comprises a preliminary first phase performed during the design of said angular position measurement system (1) comprising a step of construction of a mathematical model of said system, and a step of application to this model of a plurality of random modifications in accordance with a so-called Monte-Carlo statistical method, so as to obtain a so-called Boltzmann state distribution when a standing state is achieved and of determining, from said distribution, said predetermined threshold value *TRIG_PP.*

3.  Method according to Claim 1, **characterized in that** said position measurement system (1) comprises an angular position computation chain (7) comprising an analogue-digital converter and circuits (32-33) applying so-called offset values to said first (200) and second (201) sinusoidal signals, it comprises a second preliminary phase performed during the design of said angular position measurement system (1) comprising a step of determination of said predetermined threshold values, $V_{ref}$ and $\Delta$, from said offset values and from the electrical characteristics of said analogue-digital converter.

4.  Method according to Claim 1, **characterized in that** it comprises a step of acquisition of a so-called speed profile parameter of said rotor angular position measurement system (1) and a step of computation, from said speed profile, of a minimum delay making it possible to perform meaningful peak-to-peak measurements of said first and second sinusoidal signals outside of a transient period.

5.  Method according to one of Claims 1 or 2, **characterized in that**, said polyphase rotating electric machine comprising a magnetic material insensitive to temperature variations within a predetermined operating range of said rotor angular position measurement system (1), said threshold *TRIG_PP* is set at a constant minimum value ($C_2$) so as to delimit two regions, a first region for values above said threshold characteristic of a fault-free operation of said probes (10) and a second region for values below said threshold characteristic of operating faults of said probes (10).

6.  Method according to one of Claims 1 or 2, **characterized in that**, said polyphase rotating electric machine comprising a magnetic material sensitive to temperature variations within a predetermined operating range of said rotor angular position measurement system (1), it comprises a step of measurement or estimation of the temperature (42) of said magnetic material and a step consisting in rendering said threshold *TRIG_PP* dependent on the temperature, so as to have a linear function of the form $TRIG\_PP = pT + K_s$, with $p$ being the slope of the straight line ($C_3$) representing said linear function, T being the temperature and $K_s$ a constant, so as to delimit two regions, the first region for values situated above said straight line ($C_3$) characteristic of a fault-free operation of said probes (10) and a second region for values situated below said straight line ($C_3$) characteristic of operating defects of said probes (10).

7.  Device for implementing the method according to any one of the preceding claims, **characterized in that** it comprises means (41) for measuring the speed of said rotor and generating a signal representing said speed status $E_{vt}$, an electronic diagnostic module (40) for receiving at least said first (200) and second (201) sinusoidal signals on first ($e_1$) and second ($e_2$) inputs and a signal representing said speed status $E_{vt}$ on a third input ($e_3$), said diagnostic module (40) comprising means for generating, from these signals and from said predetermined thresholds said first and second relationships, for checking the "TRUE" or "FALSE" logic states of these relationships and for generating at the output (400) a signal representative of a fault-free operation of said probes (10) or of operating faults of at least one of said probes (10) according to said logic states.

8.  Device according to Claim 8, **characterized in that**, said polyphase rotating electric machine comprising a magnetic material sensitive to temperature variations within a predetermined operating range of said rotor angular position measurement system (1), it further comprises means (42) for measuring or estimating the temperature of this material delivering a signal (T) representative of this temperature transmitted to a fourth input ($e_4$) of said diagnostic module (40) and **in that** this diagnostic module (40) generates a threshold value *TRIG_PP* obeying a linear function of the form $TRIG\_PP = pT + K_s$, with $p$ being the slope of the straight line representing said linear function, T being the temperature and $K_s$ a constant.

9.  Device according to one of Claims 7 or 8, **characterized in that**, said polyphase rotating electric machine being a three-phase machine, said rotor angular position measurement system (1) comprises three probes (10), called $S_1$ to $S_3$, respectively, **in that** it further comprises means (100) for supplying electrical energy to said probes (10) delivering a voltage of determined amplitude $V_{cc}$, and **in that** said device, when said first relationship is verified, generates at the output (400) a diagnostic signal indicating a fault type from among the following categories: the probe $S_1$ is short-circuited by being linked to a determined potential (0V or $V_{cc}$), the probe $S_1$ is disconnected, the probes $S_2$ or $S_3$ are short-circuited by being linked to a determined potential (0V or $V_{cc}$), or together, the probes $S_1$ and ($S_2$ or $S_3$) are disconnected, the probes $S_1$ and $S_2$ and $S_3$ are short-circuited by being linked to a determined potential (0V or $V_{cc}$), or together, the probes $S_1$ and $S_2$ and $S_3$ are disconnected or said electrical energy supply means (100) are defective.

**10.** Device according to one of Claims 7 or 8, **characterized in that**, said polyphase rotating electric machine being a three-phase machine, said rotor angular position measurement system comprises three probes (10), called $S_1$ to $S_3$, respectively, **in that** it further comprises means (100) for supplying electrical energy to said probes (10) delivering a voltage of determined amplitude $V_{cc}$, and **in that** said device, when said second relationship is verified, generates at the output (400) a diagnostic signal indicating a type of fault from among the following categories: the probes $S_1$ and $S_2$ and $S_3$ are disconnected, the probes $S_1$ and $S_2$ and $S_3$ short-circuited by being linked to a determined potential (0V or $V_{cc}$), the probes $S_1$ and $S_2$ and $S_3$ short-circuited by being linked to a determined potential (0V or $V_{cc}$), or together, or said electrical energy supply means (100) are defective.

**11.** Device according to any one of Claims 7 to 10, **characterized in that** said probes (10) consist of Hall-effect sensors.

**12.** Device according to any one of Claims 7 to 11, **characterized in that** said polyphase rotating machine is an alternator-starter.

**13.** Device according to any one of Claims 7 to 12, **characterized in that** said diagnostic module (40) consists of an embedded digital computer with stored programme.

**Fig. 1**

**Fig. 3**

Fig. 4

EP 2 414 781 B1

Fig. 2

**EP 2 414 781 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006010864 A2

- FR 0853359